(19) European Patent Office — Europäisches Patentamt — Office européen des brevets

(11) **EP 0 968 961 A2**

## (12) EUROPEAN PATENT APPLICATION

(43) Date of publication:
**05.01.2000 Bulletin 2000/01**

(51) Int. Cl.[7]: **C01G 49/10**

(21) Application number: **99110711.1**

(22) Date of filing: **04.06.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **04.06.1998 US 87930 P**
**01.06.1999 US**

(71) Applicant:
**TESSENDERLO CHEMIE N.V.**
**3980 Tessenderlo (BE)**

(72) Inventors:
- **Strobbe, Marc**
  **3980 Tessenderlo (BE)**
- **Luts, Peter**
  **3980 Tessenderlo (BE)**
- **Vermeiren, Christian**
  **1640 Sint-Genesius-Rode (BE)**

(74) Representative:
**Jönsson, Hans-Peter, Dr.Dipl.-Chem. et al**
**Patentanwälte**
**von Kreisler Selting Werner,**
**Bahnhofsvorplatz 1 (Deichmannhaus am Dom)**
**50667 Köln (DE)**

(54) **Elemental chlorine-free conversion of waste HCl liquor by oxidation and concentration to form aqueous ferric chloride solution**

(57) A process for treating waste HCl pickle liquor by oxidation to form aqueous ferric chloride ($FeCl_3$) without using chlorine gas. In accordance with the process, heavy metals and other impurities are removed from the waste HCl pickle liquor, as desired. The ferrous chloride-containing solution is oxidized in the presence of a stoichiometric amount of HCl to form aqueous ferric chloride solution. The resulting solution, which is relatively dilute, preferably is concentrated, typically by evaporation. Ferric chloride solution is useful, for example, for water treatment.

EP 0 968 961 A2

## Description

### Cross-Reference to Related Application

This application claims priority to U.S. Provisional Application No. 60/087,930 filed June 4, 1998. This application is a continuation-in-part of the above-identified Provisional Application.

### Field of the Invention

The invention is directed to a method for treating waste HCl pickle liquor. In particular, the invention is directed to conversion of waste HCl into an aqueous ferric chloride solution by a chlorine-free process.

### Background of the Invention

Hydrochloric acid is used to pickle steel to remove the oxide coating from the base metal. Commercial grade HCl of 30 - 34 percent concentration is generally used as makeup for the picklers. The concentrated acid typically is diluted to 16 - 20 percent or less for the pickling operation.

The pickling operation produces a waste material known as "waste HCl pickle liquor." Typically, waste HCl pickle liquor contains, in addition to water, about 18 - 25 weight percent of ferrous chloride ($FeCl_2$), less than 1 weight percent of ferric chloride ($FeCl_3$), and variable amounts of free HCl, usually no more than about 10 percent but on occasion up to about 15 percent, and other impurities. The ranges of concentration of HCl and impurities, and the identity of the impurities, depends not only on the type of steel pickled, but also on the subsequent processing. For example, waste HCl pickle liquor from wire manufacture and hot dip galvanization may be heavily contaminated with Pb and Zn. Similarly, waste HCl pickle liquor from treatment of stainless steel typically will contain Cr and Ni.

Waste HCl pickle liquor is an acidic material and environmentally-suitable disposal presents a serious economic problem. Commonly, waste HCl pickle liquor is disposed of by "deep-welling," i.e., injecting the liquor into a deep well; by neutralizing with lime (the slurry is dewatered and the solid used as land fill); by thermal decomposition (roasting process) to yield iron oxide particles and HCl gas (the HCl gas is recovered by water scrubbing, and 16 - 20 percent HCl is returned to the pickling process); or by transforming the liquor into ferric chloride solution ($FeCl_3$) by direct chlorination.

Each of the known methods for disposal of waste HCl pickle liquor has a distinct disadvantage. Deep-welling is environmentally unsuitable. Neutralization is an expensive operation, even when a dumping area is already available. Roasting processes are very expensive, in both investment costs and direct operating costs. Transformation of waste HCl pickle liquor into ferric chloride solution with chlorine poses economic problems (the cost of liquefying chlorine for transport before gasification again at the pickling plant), strategic problems (it is preferable to avoid transport of chlorine when other techniques are possible), or high logistic costs (transport of waste HCl pickle liquor to a chlorine producing unit).

Thus, there exists a need for an inexpensive, environmentally-responsible method for converting waste HCl pickle liquor to useable products.

### Summary of the Invention

The invention is directed to a method for treating waste HCl pickle liquor by oxidation to form aqueous ferric chloride ($FeCl_3$) without using chlorine gas. In accordance with the method, heavy metals and other impurities are removed from the waste HCl pickle liquor, if necessary or desired. The ferrous chloride-containing solution is oxidized using gaseous oxygen in the presence of a stoichiometric amount of HCl to form aqueous ferric chloride solution. The resulting solution, which is relatively dilute, preferably is concentrated, typically by evaporation. The resulting ferric chloride solution is useful, for example, for water treatment.

### Detailed Description of the Invention

In accordance with the method of the invention, waste HCl pickle liquor is transformed to a commercial grade concentrated ferric chloride (40 - 45 percent $FeCl_3$) that can be used for water treatment purposes. The process can be implemented on the site of the pickling plant, thus alleviating the problems inherent in the known methods, as described above.

It has been proposed to limit the level of several impurities in aqueous ferric chloride streams suitable for use in water treatment applications. Table 1 below presents a European proposal that classifies such solutions into four types depending on the impurity levels.

TABLE 1

| Impurity concentration (mg/l) | | | | |
|---|---|---|---|---|
| Metal | Type 1 | Type 2 | Type 3 | Type 4 |
| As | 1.5 | 4.2 | 10.4 | 69.7 |
| Cd | 0.1 | 5.2 | 10.4 | 7.3 |
| Cr | 20.8 | 72.8 | 104 | 208 |
| Hg | 0.1 | 1.0 | 2.1 | 1.5 |
| Ni | 12.5 | 72.8 | 104 | 208 |
| Pb | 7.3 | 20.8 | 83.2 | 69.7 |
| Sb | 2.1 | 4.2 | 12.5 | 13.5 |
| Se | 2.1 | 4.2 | 12.5 | 13.5 |

The invention is directed to a method for treating waste HCl pickle liquor by oxidation to form aqueous ferric chloride ($FeCl_3$) without using chlorine gas. The invention is particularly directed to a method for treating a waste HCl pickle liquor to produce an aqueous ferric chloride solution suitable for use in water treatment applications. In accordance with the method, heavy metals and other impurities are removed from the waste HCl pickle liquor or the treated liquor, if necessary or desired. The ferrous chloride-containing solution is oxidized in the presence of a stoichiometric amount of HCl to form aqueous ferric chloride solution. The resulting solution, which is relatively dilute, preferably is concentrated, typically by evaporation.

The ferrous chloride-containing solution may need to be treated to reduce the concentration of certain impurities that can compromise the subsequent uses intended for the treated stream, particularly in water treatment. Thus, it will be appropriate to remove any materials that would be considered undesirable in the oxidized (treated) ferric chloride-containing solution. In this regard, it may be necessary to purify the waste HCl pickle liquor to eliminate deleterious impurities; for example, high concentrations of heavy metals, such as Cr and Ni, are undesirable if the treated stream is to be used for water treatment applications. Thus, the level of such impurities should be reduced. Table 1 above provides several examples of acceptable impurity concentrations in aqueous ferric chloride solutions suitable for certain water treatment applications.

The following Tables 2 and 3 present a typical range of concentrations for a variety of metallic and non-metallic impurities often found in waste pickle liquor. This list is not inclusive and a concentration of any particular material outside the indicated range is not uncommon. For example, other metals that may be found include sodium, potassium, calcium, magnesium, molybdenum and silver. Other non-metallic impurities might include cyanide, sulfur, phenol, oil and grease.

TABLE 2

| Metal Impurity | Concentration (mg/l) |
|---|---|
| Al | 10 - 100 |
| As | 0 - 2 |
| Ba | 1 - 3 |
| Cd | 0 - 10 |
| Co | 0 - 20 |
| Cu | 0 - 200 |
| Cr | 10 - 300 |
| Hg | 0 - 0.02 |
| Mn | 100 - 1,000 |
| Ni | 10 - 150 |

TABLE 2 (continued)

| Metal Impurity | Concentration (mg/l) |
|---|---|
| Pb | 0 - 6,000 |
| Sb | 0 - 10 |
| Se | 0 - 1 |
| Ti | 0 - 150 |
| Zn | 0 - 35,000 |

TABLE 3

| Non-metallic Impurity | Concentration (mg/l) |
|---|---|
| amines[1] | 0 - 20 |
| B | 0 - 500 |
| F | 0 - 15 |
| $(NH_4)^+$ | 0 - 5,000 |
| $(NO_3)^-$ | 0 - 3,000 |
| $(SO_4)^{-2}$ | 50 - 5,000 |
| Total Organic Carbon | 10 - 5,000 |

[1] as dibutylamine

Deleterious materials are removed from solution by commonly used methods known to skilled practitioners and selected to remove the undesired material. For the most part, purification processes for reducing the concentration of such impurities are practiced prior to the oxidation treatment according to the invention. However, in the broad practice of the invention it also is possible to conduct some purifications subsequent to such oxidation, i.e., by treating the ferric chloride product stream. For example, one may pass the ferric chloride stream through an activated carbon zone.

A wide variety of treatment approaches can be used to reduce the concentration of such impurities including cementation, i.e., formation of a cementitious fraction which, upon solidification, removes the deleterious material from solution, with the cementitious fraction removed by filtration (see, e.g., Japanese patent applications 06171953 and 92-332799); ion exchange processes (e.g., the METSEP process: Tunley, T.H., Sampson, T.D., *J. of South African Institute of Mining and Metallurgy*, May 1976, Vol. 76, Part 10, p. 423-427); chemical precipitation, including formation of a flocculent solid, and filtration thereof (see e.g., EPA 97870145.6 and Canadian Pat. 2,112,076); solvent extraction (see e.g., French Pat. 75 12090, German Pat. 42 04 892 and EP 0 141 313); and other methods known to skilled practitioners such as activated carbon for removing organic impurities, to separate deleterious impurities from the ferrous chloride-containing solution.

A general overview of many of these purification strategies is provides in Bozec, C., *Chloride Hydrometall*., Proc., (Int. Symp), 1997, pp. 405-425. The above-referenced publications are all incorporated herein by reference.

Skilled practitioners recognize that many of the above-identified purification processes benefit from neutralization of free HCl in the ferrous chloride-containing solution before the appropriate purification method can be carried out. Neutralization can take place by adding iron oxides, iron hydroxides, iron carbonates, elemental iron, and any other form of iron sufficiently basic to neutralize the HCl in the solution. Other neutralization schemes also will be apparent to those skilled in the art.

The following are examples of suitable neutralization reactions:

$$3 \text{ HCl} + \text{Fe(OH)}_3 \rightarrow 3 \text{ FeCl}_3 + 3 \text{ H}_2\text{O}$$

$$2 \text{ HCl} + \text{Fe} \rightarrow \text{FeCl}_2 + \text{H}_2$$

The quantity of iron preferably is at least the quantity stoichiometrically required to neutralize the acid. Lesser. quantities will leave unneutralized acid in the solution which may interfere with the purification reaction. The maximum quantity of iron is limited only by economic considerations. There may be no reason to exceed the stoichiometric amount, except in those cases which use a purification process which benefits from a more complete reduction of $Fe^{+3}$ to $Fe^{+2}$. In particular, when using cementation, chemical precipitation, certain solvent extractions and ion exchange, it generally will be desired to perform a significant reduction of the ferric ions to minimize excess reagent consumption and other complications. Complete reduction can be achieved, for example, by adding Fe in a stoichiometric quantity in accordance with the following reaction:

$$2 \text{ FeCl}_3 + \text{Fe} \rightarrow 3 \text{ FeCl}_2.$$

The quantity of iron preferably does not exceed 125 percent of the stoichiometrically-required quantity, and more preferably does not exceed 110 percent of the stoichiometrically-required quantity. A skilled practitioner will recognize with the guidance provided herein that the excess iron can be significantly higher if the neutralization is performed in a continuous column process. However, if complete reduction is not required for the purification method, it is inefficient to convert unnecessarily $FeCl_3$ to $FeCl_2$, which then must be converted back to $FeCl_3$ in the oxidation step. The basic iron-containing compounds used to neutralize the acid need be of a purity sufficient to ensure that deleterious materials are not added to the solution. Thus, typical commercially-available grades of these compounds will be suitable.

In accordance with the method of the invention, thus-purified aqueous solution of ferrous chloride, or waste HCl pickle liquor of purity sufficient to obviate purification, is oxidized in the presence of a quantity of HCl sufficient to completely react with the ferrous chloride present in the solution in the presence of oxygen to produce an aqueous solution of ferric chloride according to the following reaction:

$$4 \text{ FeCl}_2 + 4 \text{ HCl} + \text{O}_2 \rightarrow 4 \text{ FeCl}_3 + 2 \text{ H}_2\text{O}$$

The quantity of HCl present in the solution preferably is between about 100 percent and 150 percent of the stoichiometrically-required quantity, and more preferably between about 100 percent and 105 percent of that quantity. Quantities of HCl that are less than the stoichiometrically-required quantity are inefficient and do not convert the ferrous chloride to useful ferric chloride. Thus, it is preferred to have at least some stoichiometric excess. Excessive quantities of HCl are uneconomic and cause problems with attaining the free HCl specification normally required in a ferric chloride product destined for use in water treatment.

The quantity of HCl required includes any HCl in the waste HCl pickle liquor, or the purified ferrous chloride-containing solution. Thus, a waste HCl pickle liquor that does not require purification and which contains HCl may require only minor augmentation of HCl.

Any form of HCl is suitably used in the method of the invention. Preferably, a commercial grade of HCl is used. Typically, aqueous HCl solution having an HCl concentration of between about 30 and 34 percent is used. Skilled practitioners recognize that dilute HCl solutions will produce dilute ferric chloride solution, and will thus require additional expenditure of energy to concentrate the desired product. However, liquid having any concentration can be used, as can gaseous HCl. As with any of the reagents used in the method of the invention, the HCl used should not introduce deleterious impurities.

Oxygen used in the method of the invention can be commercially available oxygen, air, or any mixture comprising gaseous oxygen. Preferably, the partial pressure of the oxygen is between about 1 to about 20 bars absolute; more preferably, between about 5 and about 15 bars; and most preferably, between about 7 and about 10 bars. Skilled practitioners recognize that a total gas pressure higher than the oxygen partial pressure must be maintained to obtain the target oxygen partial pressure if a mixture comprising oxygen is utilized. However, the choice of oxygen stream is merely an economic one.

The temperature at which the oxidation is carried out is selected to provide a reasonable rate of reaction without requiring large quantities of heat. Preferably, a temperature between 150 and 200 °C is used. Inasmuch as the product ferric chloride solution often is concentrated after the oxidation step, typically it is preferred to maintain a relatively high temperature, rather than a lower temperature, as a high temperature will aid in concentration, by evaporation, of the product.

Best performance is obtained by operating the process at elevated temperatures and pressures in the presence of a molar excess of oxygen and with vigorous agitation. Generally, the reaction can be conducted in glass-lined or Ta-cladded steel reaction vessels. Oxygenation systems designed to provide high oxygen mass transfer rates and good oxygen distribution are preferred. Those skilled in the art are well aware of the wide variety of gas contacting systems that can be advantageously employed. Many systems operate by sparging the gas under the surface of the liquid reactants or by recirculating gas from the reactor head space. Suitable gasification reactors include a loop type reactor (for example, from BUSS, Switzerland) or similar reactors or a stirred tank reactor with a hollow shaft stirrer (for example, from BIAZZI, Switzerland) or similar systems.

Typically, the dilute aqueous solution of purified ferric chloride is concentrated to obtain an aqueous ferric chloride solution having a concentration of about 40 - 45 weight percent. Concentration is carried out in any method known to skilled practitioners, typically by evaporation under sub-atmospheric pressure.

Skilled practitioners recognize that the ferric chloride solution obtained is relatively dilute. Not only is the virgin HCl diluted as part of the pickling process (from 30 - 34 percent to 16 - 20 percent or less together with the addition of the stoichiometrically required quantity of HCl solution), but also oxidation of the waste HCl pickle liquor produces additional water. Thus, the resulting ferric chloride solution is relatively dilute. This dilute ferric chloride solution is not easily marketable, except under special local circumstances. Thus, the solution preferably is concentrated.

The resulting ferric chloride solution is suitable as, inter alia, a water treatment chemical. The evaporated water can be recycled to dilute the virgin HCl used in the pickling process, or for any suitable use.

It will be apparent to those skilled in the art that various modifications and variations can be made in the compositions and methods of the present invention without departing from the spirit or scope of the invention. Thus, it is intended that the present invention cover the modifications and variations of this invention provided they come within the scope of the appended claims and their equivalents.

Unless otherwise indicated, percentages expressed throughout the application are by weight.

## Claims

1. A process for converting waste HCl pickle liquor to an aqueous ferric chloride solution, the process comprising oxidizing ferrous chloride in aqueous solution in the presence of at least a stoichiometric quantity of HCl to form aqueous ferric chloride solution.

2. The process of claim 1 further comprising adding HCl to the waste HCl pickle liquor solution either prior to or during the oxidizing step.

3. A process for converting a waste HCl pickle liquor solution containing a quantity of HCl and ferrous chloride to an aqueous ferric chloride solution, the process comprising the steps of;

   (a) ensuring that the quantity of HCl in the waste HCl pickle liquor solution is at least a stoichiometric quantity of HCl sufficient to completely convert ferrous chloride to ferric chloride in accordance with the reaction:

   $$4\,FeCl_2 + 4\,HCl + O_2 \rightarrow 4\,FeCl_3 + 2\,H_2O \qquad (I);$$

   and
   (b) oxidizing by adding to the waste HCl pickle liquor solution a sufficient quantity of oxygen to completely oxidize the ferrous chloride to ferric chloride.

4. The process of claim 3, wherein the quantity of HCl is from about 100 percent to about 150 percent of the stoichiometric quantity.

5. The process of claim 3 further comprising the step of adding at least a first amount of an iron source selected from the group consisting of iron oxide, iron hydroxide, iron carbonate, elemental iron and mixtures thereof to the waste HCl pickle liquor solution before or during the ensuring step (a) or before or during the oxidizing step (b).

6. The process of claim 5, wherein the first amount is sufficient to neutralize any excess of the quantity of HCl above the stoichiometric quantity.

7. The process of claim 3, wherein the ensuring step (a) further comprises adding to the waste HCl pickle liquor. solution an aqueous HCl solution having a concentration from about 30 to about 34 percent HCl by weight or less based on a total weight of the aqueous HCl solution.

8. The process of claim 3, wherein the oxygen has a partial pressure from about 1 bar to about 20 bars.

9. The process of claim 3, wherein the oxidizing step (b) is carried out at an oxidizing temperature from about 150 to about 200 °C and the oxygen is provided by an oxygen source selected from the group consisting of oxygen, air, and mixtures thereof.

10. The process of claim 6, wherein the oxygen is provided by a gasification reactor selected from the group consisting of a loop type reactor, a stirred tank reactor with a hollow shaft stirrer, and a combination thereof.

11. The process of claim 3, wherein at least the oxidizing step (b) is conducted in a vessel with vigorous agitation of the waste HCl pickle liquor solution.

12. The process of claim 3 further comprising the step of concentrating the aqueous ferric chloride solution to a concentration from about 40 to about 45 percent by weight based on a total weight of the aqueous ferric chloride solution.

13. The process of claim 12, wherein the concentrating step is achieved by evaporation to yield water and further comprising the step of recycling the water to dilute the waste HCl pickle liquor solution.

14. The process of claim 3 further comprising the step of purifying the waste HCl pickle liquor solution at least before the oxidizing step (b) to remove metallic and non-metallic impurities.

15. The process of claim 14, wherein the metallic impurities are selected from the group consisting of Na, K, Ca, Mg, Mo, Ag, Al, As, Ba, Cd, Co, Cu, Cr, Hg, Mn, Ni, Pb, Sb, Se, Ti, Zn and mixtures thereof.

16. The process of claim 14, wherein the non-metallic impurities are selected from the group consisting of cyanide, sulfur, phenol, amine, B, F, $(NH_4)^+$, $(NO_3)^-$, $(SO_4)^{2-}$, organic carbon and mixtures thereof.

17. The process of claim 16, wherein the organic carbon is selected from the group consisting of oil, grease and mixtures thereof and the amine is dibutylamine.

18. The process of claim 14, wherein the purifying step yields a Type 1, 2, 3, or 4 solution.

19. The process of claim 18, wherein the oxidizing step (b) or the purifying step yields the aqueous ferric chloride solution in a form suitable for use as a water treatment chemical.

20. The process of claim 14, wherein the purifying step is achieved by passing the waste HCl pickle liquor solution through a member selected from the group consisting of activated charcoal, an ion exchanger, a filter and combinations thereof, cementation of the waste HCl pickle liquor solution, chemical precipitation of the waste HCl pickle liquor solution, solvent extraction of the waste HCl pickle liquor solution or combinations thereof.

21. The process of claim 3 further comprising the step of purifying the waste HCl pickle liquor solution after the oxidizing step (b).

22. A process for converting a waste HCl pickle liquor solution containing a quantity of HCl and ferrous chloride to an aqueous ferric chloride solution, the process comprising the steps of:

(a) ensuring that the quantity of HCl in the waste HCl pickle liquor solution is at least a stoichiometric quantity of HCl sufficient to completely convert ferrous chloride to ferric chloride in accordance with the reaction:

$$4\ FeCl_2 + 4\ HCl + O_2 \rightarrow 4\ FeCl_3 + 2\ H_2O \qquad (I);$$

and
(b) oxidizing the waste HCl pickle liquor solution in the presence of a sufficient quantity of oxygen to completely oxidize the ferrous chloride to ferric chloride.